# EUROPÄISCHE PATENTANMELDUNG

(11) **EP 0 999 075 A2**
(43) Veröffentlichungstag der Anmeldung: **10.05.2000**
(21) Anmeldenummer: 99120810.9
(22) Anmeldetag: 21.10.1999
(51) Int. Cl.: B60B 3/16

(54) **Radbefestigung**

(30) Priorität: 04.11.1998 DE 19850759
(71) Anmelder: Volkswagen Aktiengesellschaft, 38436 Wolfsburg (DE)
(72) Erfinder: Szabo, Laszlo, Dipl.-Ing., 38165 Lehre (DE)

(57) **Zusammenfassung**

Es wird eine Radbefestigung beschrieben, die insbesondere für ein Leichtmetallrad und hier vorzugsweise für ein Rad aus Magnesium eingesetzt werden soll, wobei die Radbefestigung zumindest eine Schraube (1) aufweist, die zur Befestigung eines Rades eine Öffnung des Rades durchgreift und ein zwischen der Schraube und dem Rad (4) angeordnetes Bauteil aufweist, welches einen direkten Kontakt zwischen der Schraube und dem Rad verhindert, wobei das Bauteil eine Scheibe (5) ist. Die zwischen der Schraube und dem Rad angeordnete Scheibe (5) verhindert einen direkten Kontakt zwischen diesen Bauteilen und damit eine mögliche Kontaktkorrosion. Die Ausbildung dieses zwischengeschalteten Bauteils als Scheibe (5) läßt eine einfache und damit kostengünstige Herstellung zu. Zudem wird durch diese Scheibe (Beilag- bzw. Unterlegscheibe) eine unzulässig hohe Flächenpressung am Rad verhindert.

## Beschreibung

Die vorliegende Erfindung betrifft eine Radbefestigung, und insbesondere eine Radbefestigung für ein Leichtmetallrad, gemäß dem Oberbegriff des Patentanspruchs 1.

Herkömmliche Felgen bzw. Räder aus Stahl werden mittels einer Stahlschraube am Kraftfahrzeug befestigt, wobei infolge einer kugelabschnittsförmigen bzw. kegelabschnittsförmigen Kontaktfläche zwischen Rad und Schraube eine sehr hohe Flächenpressung erreichbar ist, die einem Lösen der Schraube (oder Mutter) entgegenwirkt.

Eine solche Radbefestigung ist für ein Leichtmetallrad nicht geeignet, da einerseits zwischen einer Stahlschraube und dem Leichtmetall im Berührungsbereich eine Kontaktkorrosion auftritt und da andererseits durch die hohe Flächenpressung am Leichtmetallrad eine starke Setzung des Radmaterials eintritt, die ein Lösen der Schraube nach sich zieht.

Insbesondere für die Befestigung von Aluminium- oder Magnesiumrädern sind die Stahlschrauben wegen der vorstehend erwähnten Nachteile nicht einsetzbar.

Aus dem Deutschen Gebrauchsmuster GM 72 06 171 ist eine Lösung bekannt, die bei einem Magnesiumrad derart vorgesehen ist, daß dort an dem Magnesiumrad in Öffnungen (für die Befestigung des Rades) ein Buchse aus Aluminium eingesetzt ist, in die wiederum eine Buchse aus Stahl eingesetzt ist, durch die dann die Schraube geführt wird. Durch die Aluminiumbuchse wird ein Kontakt zwischen dem Stahl und dem Magnesium verhindert.

Diese Lösung ist jedoch sehr aufwendig herzustellen und damit sehr teuer.

Die vorliegende Erfindung hat daher die Aufgabe, eine Radbefestigung, insbesondere für ein Leichtmetallrad zu schaffen, welche einfach im Aufbau ist, eine zuverlässige Anbringung eines Rades am Fahrzeug ermöglicht sowie eine Kontaktkorrosion unterbindet.

Diese Aufgabe wird durch eine Radbefestigung gelöst, die die Merkmale des Patentanspruchs 1 aufweist.

Demnach umfaßt die Radbefestigung, insbesondere für ein Leichtmetallrad, zumindest eine Schraube, die zur Befestigung eines Rades eine Öffnung des Rades durchgreift und ein zwischen der Schraube und dem Rad angeordnetes Bauteil, welches einen direkten Kontakt zwischen der Schraube und dem Rad verhindert, wobei das Bauteil eine Scheibe ist.

Die zwischen der Schraube und dem Rad angeordnete Scheibe verhindert einen direkten Kontakt zwischen diesen Bauteilen und damit eine mögliche Kontaktkorrosion. Die Ausbildung dieses zwischengeschalteten Bauteils als Scheibe läßt eine einfache und damit kostengünstige Herstellung zu. Zudem wird durch diese Scheibe (Beilag- bzw. Unterlegscheibe) eine unzulässig hohe Flächenpressung am Rad verhindert.

Vorteilhafte Weiterbildungen der Radbefestigung nach dem Patentanspruch 1 sind der Gegenstand von Unteransprüchen.

Die Erfindung wird im folgenden anhand einer ausführlichen Beschreibung der Ausführungsform beschrieben, die sich auf die zugehörige Zeichnung bezieht.

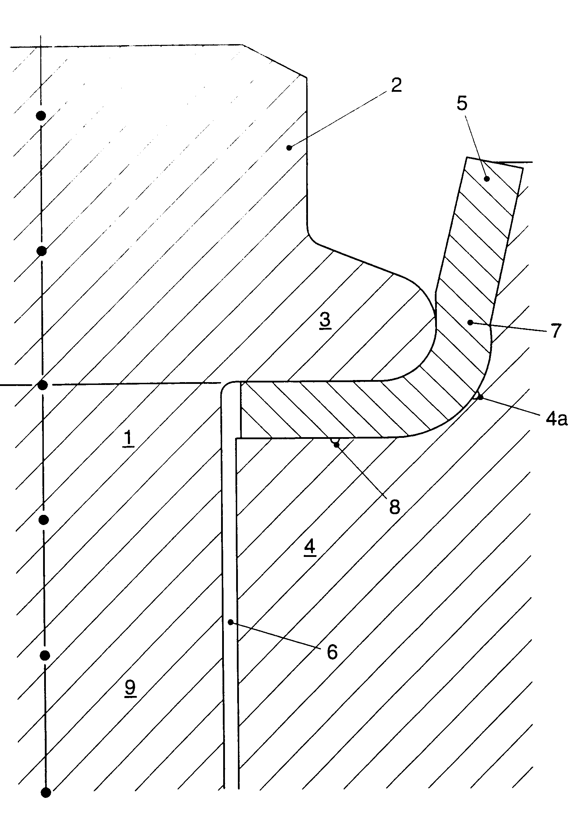

In der Zeichnung zeigt die
Fig. eine Radbefestigung nach einer Ausführungsform gemäß der vorliegenden Erfindung.

In der Figur ist in eine stark vergrößerte Querschnittdarstellung eines Teils der Radbefestigung gezeigt, wobei in der linken Hälfte der Zeichnung eine Schraube 1 und in der rechten Hälfte der Zeichnung ein Rad 4 jeweils teilweise dargestellt ist.

Bei der vorliegenden Ausführungsform ist das Rad 4 aus Magnesium gefertigt und weist über den Umfang verteilt eine Mehrzahl von Öffnungen 6 auf, durch die jeweils eine Schraube 1 greift, um das Rad 4 beispielsweise an einem Radträger (nicht dargestellt) eines Kraftfahrzeuges befestigen zu können.

Die Anzahl der Öffnungen 6 ist je nach Bedarf festzulegen und liegt üblicherweise zwischen drei und sechs.

Um jede Öffnung 6 herum, die in der beschriebenen Ausführungsform einen kreisrunden Querschnitt aufweist, ist eine Vertiefung 8 in dem Rad 4 ausgebildet. Die Schraube 1, die vorzugsweise aus Stahl gefertigt ist und einen zylindrischen Schaft 9 hat, durchgreift mit dem Schaft 9 die Öffnung 6 in dem Rad 4. Ein Schraubenkopf 2 der Schraube 1 wird in der Vertiefung 8 angeordnet und kann mit einem Abschnitt nach außerhalb der Vertiefung 8 ragen. Die Vertiefung 8 weist einen Boden auf, der in der Figur horizontal verläuft.

Zwischen der Schraube 1 und dem Rad 4 ist eine Scheibe 5 angeordnet. Um eine vergrößerte Auflagefläche der Schraube 1 zu erzielen, ist diese im Bereich der Anlagefläche zu der Scheibe 5 bzw. zu dem Rad 4 mit einem Flansch 3 versehen. Dieser Flansch 3 ist im Übergangsbereich zwischen dem Schaft 9 und dem Schraubenkopf 2 ausgebildet.

Die Vertiefung 8 am Rad 4 weist im Übergangsbereich zwischen dem Boden der Vertiefung 8 und dem Randabschnitt der Vertiefung 8 ein Nut 4a auf, die im vorliegenden Fall annähernd Kreisabschnittsform aufweist.

In der Figur ist ein Zustand dargestellt, in dem die Schraube 1 vollständig angezogen ist, um das Rad 4 an dem Radträger des Fahrzeuges zu befestigen. Hierdurch wird die Scheibe 5, die zwischen der Schraube 1 bzw. dem Flansch 3 der Schraube 1 und dem Rad 4 angeordnet ist, bleibend verformt und in enge Anlage mit der Vertiefung 8, der Nut 4a und dem Flansch 3 gebracht.

Durch diese Maßnahmen wird die Auflagefläche des Schraubenkopfes 2 am Rad 4 vergrößert. Zum Beispiel kann der Flansch 3 gemäß DIN 6921 ausgeführt sein. Die Scheibe 5 kann eine Dicke von etwa 2 mm aufweisen und aus einer Aluminiumlegierung bestehen, so daß bei einem Festziehen der Schraube 1 die zwischen der Schraube 1 und dem Rad 4 eingelegte Scheibe 5 in die Vertiefung 8 und in die Nut 4a des Rades 4 eingedrückt wird.

Der direkte Kontakt zwischen der (Stahl-) Schraube 1 und dem Rad 4 aus Magnesium wird durch die Scheibe 5 verhindert. Eine Kontaktkorrosion kann an dieser Stelle nicht mehr auftreten.

Im Rundungsbereich 7 der Scheibe 5 ist ein Formschluß in Radumfangsrichtung zwischen den Bauteilen 1, 4 und 5 gegeben, wobei die Reibung an der Kontaktfläche (Umfangsrand) zwischen diesen Bauteilen einem Lösen der Radschraube entgegenwirkt.

Die Scheibe 5 weist einen einfachen Aufbau auf und kann auf einfachste Art und Weise bei der erstmaligen Befestigung der Schraube 1 zwischengelegt werden. Durch den Eingriff zwischen der so eingepreßten Scheibe 5 und der Nut 4a des Rades 4 kann ein Herausfallen der Scheibe 5 nach einem Lösen der Schraube 1 (zum Beispiel bei einem Radwechsel) verhindert werden.

In der Figur ist die Nut 4a mit einer nur geringfügigen Hinterschneidung vorgesehen. Erforderlichenfalls kann die Tiefe der Nut 4a vergrößert werden.

Zeichnerisch nicht dargestellt ist, daß die Nut 4a entweder über den gesamten Umfang der Vertiefung 8 verlaufend ausgebildet sein kann oder lediglich abschnittsweise am Umfang der Vertiefung 8 vorgesehen sein kann.

Demnach weist eine erfindungsgemäße Radbefestigung, die insbesondere für ein Leichtmetallrad vorgesehen ist, die jedoch auch bei einem herkömmlichen Metallrad einsetzbar ist, wobei jedoch vorzugsweise der Einsatz bei einem Rad aus Magnesium erfolgt, zumindest eine Schraube auf, die zur Befestigung des Rades eine Öffnung des Rades durchgreift sowie ein zwischen der Schraube und dem Rad angeordnetes Bauteil auf, welches einen direkten Kontakt zwischen der Schraube und dem Rad verhindert, wobei das Bauteil eine Scheibe ist. Die zwischen der Schraube und dem Rad angeordnete Scheibe verhindert einen direkten Kontakt zwischen diesen Bauteilen und damit eine mögliche Kontaktkorrosion. Die Ausbildung dieses zwischengeschalteten Bauteiles als Scheibe läßt eine einfache und damit kostengünstige Herstellung zu. Zudem wird durch diese Scheibe (Beilag- bzw. Unterlegscheibe) eine unzulässig hohe Flächenpressung am Rad verhindert. Vorzugsweise besteht die Scheibe aus einer Aluminiumlegierung.

Der Schutzumfang der vorliegenden Erfindung wird ausschließlich durch die zugehörigen Patentansprüche bestimmt und die obige Beschreibung dient lediglich der Erläuterung einer Ausführungsform der erfindungsgemäßer Radbefestigung.

### BEZUGSZEICHENLISTE

- 1: Schraube
- 2: Schraubenkopf
- 3: Flansch
- 4: Rad
- 4a: Nut
- 5: Scheibe
- 6: Öffnung
- 7: Rundungsbereich
- 8: Vertiefung
- 9: Schaft

## Patentansprüche

1. Radbefestigung, insbesondere für ein Leichtmetallrad, mit
zumindest einer Schraube (1), die zur Befestigung eines Rades (4) eine Öffnung (6) des Rades (4) durchgreift, und mit
einem zwischen der Schraube (1) und dem Rad (4) angeordneten Bauteil (5), welches einen direkten Kontakt zwischen der Schraube (1) und dem Rad (4) verhindert,
**dadurch gekennzeichnet,** daß das Bauteil (5) eine Scheibe ist.

2. Radbefestigung nach Anspruch 1, dadurch gekennzeichnet, daß
die Schraube (1) im Bereich der Anlage mit der Scheibe (5) einen Flansch (3) aufweist.

3. Radbefestigung nach Anspruch 1 oder 2, dadurch gekennzeichnet, daß
die Schraube (1) aus Stahl, das Rad (4) aus Magnesium und die Scheibe (5) aus einer Aluminiumlegierung besteht.

4. Radbefestigung nach einem der Ansprüche 1 bis 3, dadurch gekennzeichnet, daß
das Rad (4) im Bereich der Anlage mit der Scheibe (5) eine Nut (4a) aufweist.

5. Radbefestigung nach Anspruch 4, dadurch gekennzeichnet, daß
die Außenkontur des Flansches (3) im Anlagebereich im wesentlichen der Kontur der Nut (4a) entspricht.

6. Radbefestigung nach einem der Ansprüche 4 oder 5, dadurch gekennzeichnet, daß
sich die Scheibe (5) bei einem Anziehen der Schraube (1) zum Befestigen des Rades (4) verformt und der Kontur des Flansches (3) und der Nut (4a) anpaßt.

7. Radbefestigung nach einem der Ansprüche 1 bis 6, dadurch gekennzeichnet, daß
die Scheibe (5) einen Rundungsbereich (7) aufweist, der einen Formschluß zwischen der Schraube (1), der Scheibe (5) und dem Rad (4) in Radumfangsrichtung ausbildet.

8. Radbefestigung nach einem der Ansprüche 1 bis 7, dadurch gekennzeichnet, daß
die Scheibe (5) eine Dicke von etwa 2 mm aufweist.
